# EUROPEAN PATENT APPLICATION

(11) **EP 3 530 120 A1**
(43) Date of publication of application: **28.08.2019**
(21) Application number: 17864550.3
(22) Date of filing: 13.10.2017
(51) Int. Cl.: A23G 3/50, A23G 3/54

(54) **CONFECTIONERY PRODUCT**

(30) Priority: 24.10.2016 RU 2016141620
(71) Applicant: Limited Liability Company Lighthouse Ocean, St.Petersburg 197022 (RU)
(72) Inventor: REPINA, Anastasiya Yurievna, St.Petersburg 197318 (RU); MIKHAILOVA, Elena Yurievna, St.Petersburg 198510 (RU)
(74) Representative: Isarpatent
(86) International application number: PCT/RU2017/050107
(87) International publication number: WO 2018/080351

(57) **Abstract**

The utility model relates to the field of the confectionery industry, specifically to composite confectionery products, in particular sweets. A confectionery product comprises a hollow chocolate-based shell (1) consisting of two connected parts (3, 4) which form a three-dimensional geometrical figure, and also a filling (2) placed inside the shell (1). The shell (1) is in the form of a faceted crystal and is formed by a first part (3) having a larger base (5) in the form of a regular polyhedron linked by means of triangular facets to a smaller base (6) in the form of a regular polyhedron, and by a second part (4) having a base (8) in the form of a regular polyhedron linked by means of triangular facets to a point (9), wherein the base (8) of the second part (4) of the shell is connected to the larger base (5) of the first part (3). The technical result of the utility model consists in maintaining the shape of the product during the process of manufacturing said product by an industrial method, storing said product and extracting same from a package.

## Description

### Field of the Utility Model

The present utility model relates to the field of confectionary industry, more specifically to composite confectionary products, and in particular to sweets comprising a chocolate shell and a filling.

### Prior Art

Various structures of composite confectionary products are known in the art.

Confectionary products are known that comprise two connected parts of a shell with a smooth spherical or nearly spherical surfaces and a filling placed in the shell cavity (see, e.g., Patent RU2242881, publ. on 27.12.2004).

A disadvantage of such products with a smooth shell is their deformability during shell life or when a product is removed from its package.

Patent RU2336716, publ. on 27.10.2008 (the closest analogous solution) discloses a confectionary product comprising a shell made of two parts having a curved shape with a relief surface. The general strength of the structure is ensured, according to the invention, by selecting a composition of the shell and that of the filling.

However, in a case where a soft filling is used, the strength may become insufficient for maintaining the shape of the product. Furthermore, an asymmetrical curved shape of the shell may result in non-uniform shrinkage in the process of molding and in distortion of the product geometry relative to the set one.

### Summary of the Utility Model

The object of the claimed utility model is to create a composite confectionary product structure, which would be stable to deformations associated with shrinkages that may occur during the process of manufacturing the shell parts and with mechanical effects during the processes of connecting the parts, storing and removing the product from a package as well as dynamically stable during knocking the product out of polycarbonate molds.

The technical effect of the utility model is maintenance of the product shape in the process of manufacturing it by an industrial method, storing and removing from a package.

The above technical effect is achieved owing to the fact that the confectionary product comprises a hollow chocolate-based shell comprising two connected parts forming a three-dimensional geometric figure and a filling placed inside the shell. The shell has a shape of a faceted crystal and is formed by a first part having a larger base in the shape of a regular polyhedron linked by means of triangular facets to a smaller base in the shape of a regular polyhedron and by a second part having a base in the shape of a regular polyhedron linked by means of triangular facets to the vertex, the base of second part of the shell being connected to the larger base of the first part.

Some particular embodiments of the utility model are provided, according to which:
- a height ratio of the first and second parts of the shell may range from 1/2 to 1/3;
- a height of the first part may be 6-9 mm, and a height of the second part may be 16-20 mm;
- a ratio between a circumscribed circle diameter of the smaller base and a circumscribed circle diameter of the larger base of the first part of the shell may range from 1/1.5 to 1/2.5;
- circumscribed circle diameters of the larger and smaller bases of the first part of the shell may be 30-34 mm and 18-21 mm, respectively;
- the thickness of a wall of the shell may be 1.5-3 mm;
- the surface of the shell is provided with a raised pattern;
- the product is a chocolate sweet.

In contrast to known analogous solutions, the claimed product has faceted surfaces providing the product with rigidity necessary for maintaining the set geometry during manufacturing and storing the product. Moreover, the disclosed shape of a faceted crystal formed by the two parts narrowing toward the smaller base and toward the vertex enables to ensure uniform shrinkage of the chocolate shell during molding as well as strength sufficient for maintaining its shape during the processes of manufacturing (including knocking the parts out of polycarbonate molds), joining the structure parts, storing the finished product as well as during removal of the product from a package.

Thus, all the features of the claimed utility model are aimed at achieving the single technical effect of maintaining the product shape.

### Brief Description of the Drawings

The utility model is explained with the use of accompanying drawings, wherein:
Fig. 1 shows a sectional view of the product;
Fig. 2 shows a general view of the claimed product;

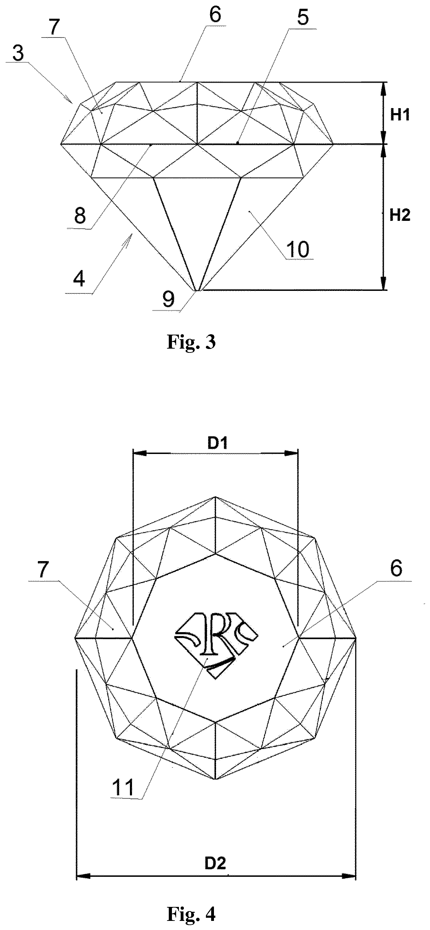

Fig. 3 shows a side view of the product;
Fig. 4 shows a bottom view of the product.

### Best Mode of Carrying Out the Utility Model

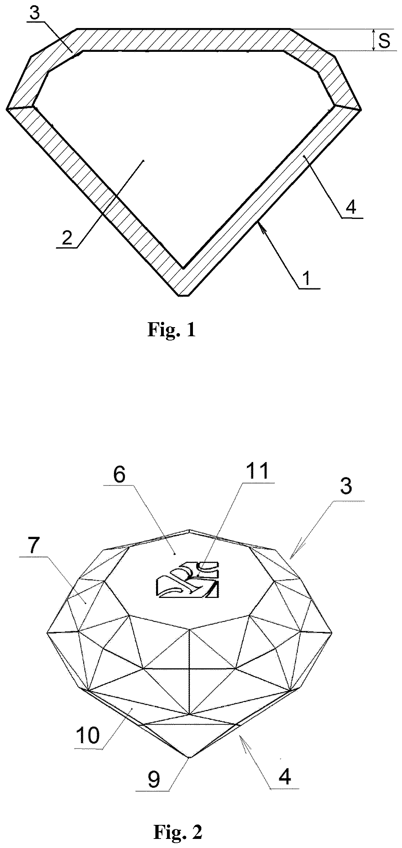

The claimed product (see Fig. 1) is a composite structure comprising a hollow shell (1) and a filling (2) placed therein. The shell (1) is made of an edible chocolate-based material that may be, in particular, a chocolate couverture, bitter, dark or milk chocolate. A fat-, fondant-, jelly-, caramel-based mass may be used as the filling (2). The filling (2) may also comprise various additives, such as, for example, crushed nuts, crunches, candied fruits.

The shell (1) has the shape of a faceted crystal (symmetrical relative to the vertical axis), which is similar to that of a faceted diamond. The shell consists of two parts (3, 4) forming, when connected, a single cavity used for placing the filling (2).

The first (upper) part (3) has two parallel bases (5) and (6), each having the shape of a regular polyhedron, in particular an octahedron, of different sizes. The larger (lower) base (5) of the first part is linked to the smaller (upper) base (6) by means of a faceted surface (7) being close to a spherical surface and having triangular facets. In the first part, a ratio between a circumscribed circle diameter D1 of the smaller base (6) and a circumscribed circle diameter D2 of the larger base (5) may range from 1/1.5 to 1/2.5. In particular, D1 may be 18-21 mm, and D2 may be 30-34 mm.

The second (lower) part (4) also has a base (8) in the shape of a regular polyhedron that coincides with the larger base (5) of the first part and which is linked to a vertex (9) along a faceted surface (10) being close to a conical (pyramid-like) surface and being formed by triangular facets. A ratio between a height H1 of the first part (3) of the shell and a height H2 of the second part (4) of the shell may range, preferably, from 1/2 to 1/3. In particular, H1 may be 6-9 mm, and H2 may be 16-20 mm.

A thickness S of the wall of the hollow shell (1) may range from 1.5 to 3 mm, and may be, preferably, 2.0 mm. Additionally, a portion of the surface of the shell, e.g. the smaller base (6) of the first part (3), may be provided with a raised pattern (11).

The claimed product may be manufactured as follows.

The parts (3) and (4) of the confectionary product (a sweet) are formed by a cold pressing method. This method enables to ensure highly accurate dosing and uniform distribution of a mass in the mold. This helps to obtain a crust of an identical thickness in any point and, consequently, reproduce preset efficient proportions accurately, distribute mechanical effects on the product uniformly, and achieve dynamic stability.

To do this, an accurately set amount of a tempered chocolate mass is dosed into a preheated polycarbonate mold. Then, after passing along a vibratory surface, the mold with said chocolate mass is received by a pressing station where a die cooled to a temperature of -18 to -23°C is lowered into the chocolate mass for the purpose of forming a uniform crust. The duration of acting by the die to the chocolate mass may range from 1 to 3 seconds. The arrangement of vibratory surfaces enables to obtain a dense (i.e., without air bubbles) crust, which also ensures the structure reliability and an attractive appearance. Then, a finished crust is supplied to a refrigerated cabinet for final structure formation of the parts of the hollow shell (1). Then, a filling is dosed into the shell finished parts (3, 4), and the mold containing the parts with the filling is cooled.

The filled parts (3, 4) of sweets are heated with an infrared lamp and connected in a collapsing unit. The design of the polycarbonate mold structure enables to precisely cut excess chocolate off the connection line so as not to change the product proportions. The connected double molds with finished products are cooled at an ambient temperature from 12 to 16°C. Sweets are knocked out onto substrates, and manufactured sweets are supplied for wrapping and/or packing.

The confectionary product of the above-described configuration is characterized by:
- uniform shrinkage of the parts of the shell during manufacturing, which enables to maintain the set geometry and easily remove the parts of the shell from a mold without damaging them;
- high strength of the shell and the product itself, which is sufficient for maintaining the product shape during connecting the parts of the shell as well as during storage of the product;
- an ergonomic geometry conditioned by the tapered lower part and the relief upper part that enable to remove the finished product from a package easily and without damaging it.

## Claims

1. A confectionary product comprising a hollow chocolate-based shell (1) consisting of two connected parts (3, 4) forming a three-dimensional geometric figure with a filling (2) placed inside the shell (1), **characterized in that** the shell (1) has the shape of a faceted crystal and is formed by a first part (3) having a larger base (5) in the shape of a regular polyhedron linked by means of triangular facets to a smaller base (6) in the shape of a regular polyhedron and by a second part (4) having a base (8) in the shape of a regular polyhedron linked by means of triangular facets to a vertex (9), the base (8) of the second part (4) of the shell being connected to the larger base (5) of the first part (3).

2. The confectionary product according to Claim 1, **characterized in that** a ratio between heights H1 and H2 of the first part (3) and the second part (4), respectively, of the shell (1) may range from 1/2 to 1/3.

3. The confectionary product according to Claim 1, **characterized in that** the height H1 of the first part (3) of the shell is 6-9 mm, and the height H2 of the second part (4) of the shell is 16-20 mm.

4. The confectionary product according to Claim 1, **characterized in that** a ratio between a circumscribed circle diameter D1 of the smaller base (6) and a circumscribed circle diameter D2 of the larger base (5) of shell first part (3) of the shell ranges from 1/1.5 to 1/2.5.

5. The confectionary product according to Claim 1, **characterized in that** the circumscribed circle diameters D1, D2 of the larger base (5) and the smaller base (6) of the first part (3) of the shell are 30-34 mm and 18-21 mm, respectively.

6. The confectionary product according to Claim 1, wherein a thickness S of wall of the shell (1) is 1.5-3 mm.

7. The confectionary product according to Claim 1, **characterized in that** a raised pattern (11) is applied onto a face of the shell (1).

8. The confectionary product according to Claim 1, **characterized in that** it is a chocolate sweet.
